# EUROPÄISCHE PATENTANMELDUNG

(11) **EP 1 302 582 A1**
(43) Veröffentlichungstag der Anmeldung: **16.04.2003**
(21) Anmeldenummer: 02009346.4
(22) Anmeldetag: 05.09.2002
(51) Int. Cl.: D04H 3/14, D04H 3/16, A44B 18/00, D04H 13/00, B32B 5/26, A61F 13/62

(54) **Vliesverbundstoff für mechanische Verschlusssysteme, Verfahren zu dessen Herstellung und dessen Verwendung**

(30) Priorität: 16.10.2001 DE 10151045
(71) Anmelder: Carl Freudenberg KG, 69469 Weinheim (DE)
(72) Erfinder: Grimm, Hansjörg, 69469 Weinheim (DE); Groitzsch, Dieter, Dr., 69493 Hirschberg (DE); Adam, Peter, 27613 Raleigh (US)

(57) **Zusammenfassung**

Beschrieben wird ein mehrlagiger Vliesstoff-Verbundstoff, der mindestens eine Lage eines Polyolefin-Endlosfilamentvliesstoffes aufweist, deren Höchstzugkraft in Maschinenlaufrichtung mindestens so groß ist wie quer dazu, und im wesentlichen aus Fasern eines Titers von weniger als 4,5 dtex besteht, sowie eine mit der ersten Lage verbundene zweite Lage eines Vliesstoffes, die einen Flor aus gekräuselten Stapelfasern aus Polyolefinen enthält und deren gekräuseltes Fasern gröber als die Fasern des Vliesstoffes der ersten Lage sind, wobei die mindestens zwei Vliestofflagen an der gemeinsamen Grenzfläche durch Verkleben in Form eines vorgegebenen Musters miteinander verbunden sind.

Mit diesem Verbund wird es möglich, auch für erwachsene Inkontinenz-Patienten geeignete Windeln herzustellen, die ein mechanisches Verschlusssystem aufweisen (Klettverschluß).

## Beschreibung

### Technisches Gebiet

Die vorliegende Erfindung betrifft einen Vliesverbundstoff, der sich als hochreißfester Schlingenteil für mechanische Verschlusssysteme einsetzen lässt.

### Stand der Technik

Mechanische Verschlußsysteme werden immer mehr in Kinder- und Erwachsenen-Windelhöschen anstelle von Klebebändern eingesetzt, da sie funktionelle und preisliche Vorteile gegenüber Klebebändern aufweisen. Klebesysteme vermindern beispielsweise ihr Haftvermögen bei Kontakt mit Fetten und Ölen. Mechanische Verschlußsysteme werden auch als Klettverschlüsse bezeichnet. Diese Verschlußsysteme weisen immer zwei Bestandteile, den Verhakungsteil mit schlingenförmiger Anordnung der Fasern oder Fäden und den Hakenteil aus extrudierten, einfachhakigen-, doppelhakigen und pilzförmigen Erhebungen auf. Im englischen Sprachraum werden solche Systeme auch als Loop- und Hook-Verschlüsse bzw. auch als Female- und Male-Teil eines mechanischen Verschlusses bezeichnet.

Es gibt zahlreiche Lösungsvorschläge, den Loop-Teil eines Klettverschlüsses in Windeln durch Lösungen auf Basis von Vliesstoffen oder Vliesstoff-Verbundstoffen zu lösen.

In den US-A-5,616,394, 5,611,791 und 5,643 397 wird eine Loop-Komponente beschrieben, die aus einer Polypropylen-Folie (nachstehend auch "PP-Folie") und einer gewellten Vliesstoffschicht - der eigentlichen Loop-Schicht - aus groben Polypropylen-Fasern besteht, wobei dieselben autogen mit der Folie verschweißt sind. Die transparente, nicht atmungsaktive Folie dient gleichzeitig als Medium für die Verschweißung der Loop-Fasern, als Sperrschicht gegen Kleberdurchschlag und als Fläche für ein Mehrfarbdruck-Design auf deren Rückseite. Diese Problemlösung eignet sich für die Fälle, daß die Loop-Komponente auf eine Art Gürtel oder Bändchen aufgeklebt wird und dementsprechend relativ kleinflächig ist. Damit ist keine merkliche Verschlechterung des Tragekomforts durch die Folie beim Tragen der Windel verbunden.

Ein anderer auf einem Verbund aus Vliesstoff und Folie basierender Lösungsvorschlag ist aus der EP-A-0,774,909 bekannt und beruht auf der Fixierung eines Grobfaserflors auf einer gedehnten Folie, wobei dann nach der Fixierung die Folie entspannt wird und dadurch wellenförmige oder andersartige Erhebungen in der dritten Dimension als Verhakungsmedium erzeugt werden. Auch in diesem Fall fallen der Folie zusätzlich zu ihrer Elastizität zusätzlich die drei o.g. Funktionen zu.

In der EP-A-0,765,616 ist Loop-Vliesstoff beschrieben, in dem ein mechanisch oder hydrodynamisch vernadelter Vliesstoff aus Bikokomponenten-Bindefasern einen Walzenspalt passiert, bei dem eine Walze über dem Schmelzpunkt der Bindefaser und die andere deutlich unter dem Schmelzpunkt derselben aufgeheizt ist. Durch das Temperaturgefälle wird die eine Seite zu einer folienartigen Fläche verschmolzen und die andere Seite bleibt an der Oberfläche ungebunden. Über den Querschnitt des Komposites erfolgt eine gradientielle Abnahme der Faserverschmelzung von der folienartigen Seite zur eigentlichen Loop-Seite.

Auf dem Gebiet der schweren Inkontinenz werden heute noch Windeln mit Klebe-verschlüssen verwendet. Solche Windeln sind üblicherweise als Verschlußsystem mit einem Gürtel aus Vliesstoff-Folien-Verbundstoffen und einem Klebestreifen als zweiten Teil versehen.

Problemlösungen auf Basis eines mechanischen Verschlußsystemes sind nicht bekannt, wären aber aufgrund der oben beschriebenen Vorteile wünschenswert.

Die Anforderungen an einen vollflächig als Loop-Teil ausgebildeten Gürtel sind sehr hoch. Aufgrund des direkten Kontaktes des Gürtels mit der menschlichen Haut muß der Gürtel auf der Hautkontaktseite so ausgebildet sein, dass Hautirritationen oder gar Hautschädigungen ausgeschlossen werden. Der Gürtel sollte zum Zwecke eines hohen Tragekomforts atmungsaktiv, d.h. durchlässig für Luft, Schweiß und Wasserdampf sein.

Die vom Körper abgewandete Seite muß selbstverständlich ausreichende Verhakungseigenschaften zeigen. Außerdem sollte ein solcher Gürtel eine gewisse Quersteifigkeit aufweisen, die ein Einrollen während des Tragens verhindert und trotzdem sollte der Gürtel weich und textil sein und eine gute Haptik vermitteln.

Auch wird in vielen Fällen eine hohe Höchstzugkraft des Gürtels verlangt, beispielsweise wenn bei schwer inkontinenten Patienten beim Anlegen der Windeln durch das Pflegepersonal der Patient seitlich abgerollt werden muß. Die Höchstzugkraft kann zwar durch Erhöhung der Gürtelbreite in gewissen Grenzen beeinflußt werden, die Kosten des Gürtels für einen Einmalartikel einerseits und das Windel-Design andererseits erlauben hier nur sehr wenig Spielraum. Für eine Gürtelbreite zwischen beispielsweise 4 bis 6 cm sind Höchstzugkräfte von ca. 60 bis ca. 150 N/5cm Streifenbreite erforderlich.

Für dieses neue mechanische Verschlußkonzept eines hochfesten Vliesverbundstoffes sind bislang keine Lösungen bekannt. Die oben beschriebenen Lösungsvorschläge mit einseitiger Folienabdeckung sind nicht ausreichend atmungsaktiv (durchlässig), zeigen eine Neigung zum Rascheln bei mechanischer Beanspruchung und sind für den Kontakt mit der Haut ungeeignet. Die folienfreien Vorschläge weisen rauhe, für den Kontakt mit der Haut nicht akzeptable Oberflächen auf und sind ebenfalls viel zu wenig textil. Das in der EP-A-0 765 616 beschriebene Flächengebilde ist für die Anwendung als Windel bei inkontinenten Patienten aufgrund zwar porösen, aber dennoch zu folienartig abgeschmolzenen Basisseite ebenfalls ungeeignet.

Ausgehend von diesem Stand der Technik wird mit der vorliegenden Erfindung ein Vliesverbundstoff bereitgestellt, der die Nachteile der aufgeführten bekannten Lösungsvorschläge für den Loop-Teil von Klettverschlüsseln nicht mehr aufweist.

### Darstellung der Erfindung

Die vorliegende Erfindung betrifft einen mehrlagigen Vliesstoff-Verbundstoff, der mindestens eine Lage eines Polyolefin-Endlosfilamentvliesstoffes, vorzugsweise eines Polypropylen-Endlosfilamentvliesstoffes aufweist, deren Höchstzugkraft in Maschinenlaufrichtung mindestens so groß ist wie quer dazu, vorzugsweise ein Verhältnis von 1:1 bis 2,5:1 aufweist, und im wesentlichen aus Fasern einem Titer von weniger als 4,5 dtex, vorzugsweise im Bereich von 0,8 bis 4,4 dtex, ganz besonders bevorzugt 1,5 bis 2,8 dtex, besteht, sowie eine mit der ersten Lage verbundene zweite Lage eines Vliesstoffes, die einen Flor aus gekräuselten, vorzugsweise zweidimensional- und/oder spiral gekräuselten, Stapelfasern aus Polyolefinen enthält und deren gekräuselte Fasern gröber als die Fasern des Vliesstoffes der ersten Lage sind, und vorzugsweise einen Titer von 3,3 bis 20 dtex, ganz besonders bevorzugt 5,0 bis 12,0 dtex aufweisen wobei die mindestens zwei Vliestofflagen an der gemeinsamen Grenzfläche durch Verkleben in Form eines vorgegebenen Musters miteinander verbunden sind.

Die gekräuselten Stapelfasern des Flors der zweiten Vliesstofflage weisen Stapelfasern aus Olefin-Homopolymer oder Olefin-Copolymer auf oder sind verschnitten aus anderen Materialien, wie Polyester, Polyamid oder Polyacrylnitril, zusammen mit einer oder mehr weiteren Faserkomponente aus olefinischem Homo- oder Copolymer.

Die gekräuselten Fasern der Stapelfaserschicht der zweiten Vliesstofflage sind gröber, als die der Endlosfilamentfaserschicht der ersten Vliesstofflage. Die Stapelfasern aus olefinischem Homopolymer oder Copolymer bzw. die Mehrkomponentenfasern mit Anteilen an olefinischem Homo- oder Copolymer können 100 %iger Bestandteil der Stapelfaserschicht sein oder nur einen Teil der Stapelfaserschicht ausmachen. Zum Zwecke möglichst hoher Verschlußfestigkeiten mit dem Hook-Teil sind mindestens 40 Gew.% dieser Fasern vorteilhaft.

Bei der Herstellung des erfindungsgemäßen Verbundstoffes werden mindestens zwei verschiedene Vlieslegetechniken miteinander kombiniert. Dabei wird den sehr hohen Anforderungen an einen Gürtel für Erwachsenen-Windeln, die von Patienten mit schwerer Inkontinenz getragen werden können, Rechnung getragen.

Die Verbindung der mindestens zwei Vliestofflagen (nachstehend "Stapelfaser- und Endlosfilamentschicht" genannt) erfolgt durch klebendes Verbinden beider Schichten an der gemeinsamen Grenzfläche in Form eines vorgegebenen Musters. Dabei handelt es sich vorzugsweise um autogenes Verschweißen der polyolefinischen Faserbestandteile beider Schichten, wie durch Hitze und Druck und/oder durch Ultraschall.

Die Verbindungsflächen bestehen aus sich nicht überkreuzenden und vorzugsweise ununterbrochenen Linien. Diese können parallel, spiegelbildlich oder versetzt zueinander angeordnet sein. Die gesamte Verbindungsfläche beträgt üblicherweise 10-40 % der Gesamtfläche, vorzugsweise 18 bis 32 %. Die Linien könne geradlinig bzw. regel- oder unregelmäßig wiederholend gekrümmt sein. Sie können auch regelmäßig oder unregelmäßig zickzackförmig geformt sein. Die Ausrichtung der Linien kann in Maschinenlaufrichtung, quer zur Maschinenlaufrichtung und in jedem beliebigen Winkel zwischen diesen beiden Richtungen erfolgen.

Der erfindungsgemäße Vliesverbundstoff umfasst die oben beschriebenen feinund grobtitrigen Vliesstofflagen.

Der Endlosfilamentvliesstoff kann nach den an sich bekannten Spinnvliesstoffverfahren hergestellt werden; dabei werden die ersponnenen Endlosfilamente mit gerichteten Luftströmen abgeschreckt und gereckt bevor diese auf ein Band abgelegt werden.

Der Spinnvliesstoff besteht in der Regel hauptsächlich aus Polyolefin-Fasern, vorzugsweise aus Polypropylenfasern und/oder aus Fasern aus einem Copolymer aus Propylen und einem anderen Polyolefin.

Der Spinnvliesstoff ist vorzugsweise maximal verstreckt, um möglichst hohe Festigkeiten zu erreichen. Diejenigen Ablagemethoden sind vorzuziehen, die an eine isotrope Faserverteilung möglichst nahe kommen. Ganz besonders bevorzugte Spinnvliesverfahren sind solche, die durch Schwenkung der Endlosfilamente quer zur Maschinenlaufrichtung eine hohe mechanische Querfestigkeit aufweisen.

Die Herstellungsbedingungen des Spinnvliesstoffes, wie Lochdüsendurchmesser, Fördermenge und Reckbedingungen, sind so zu wählen, daß feine Fasern in dem angegeben Bereich entstehen. Die Endlosfilamente aus Polyolefin können frei von hydrophilierenden Additiven sein oder solche in der Faser eingeschmolzen bzw. auf deren Oberfläche aufgetragen enthalten. Für die Anwendung in Windeln ist es jedoch vorteilhaft, wenn sie einen wasserabweisenden Charakter aufweisen. Im Prinzip können die Endlosfilamente beliebige bekannte Additive zum Zwecke einer Eigenschaftveränderung in oder auf der Faser enthalten, wie z.B. Fluorcarbonharze zum Zwecke der Schmutzabweisung oder antimikrobielle Mittel zur Verhinderung von Keimbildung auf der Hautkontaktseite. Auch Gleitmittel oder andere Mittel zur Weichheits- und Griffverbesserung können vor oder nach der Laminierung zu dem Verbundstoff appliziert worden sein. Die Polyolefin-Endlosfilamentschicht kann auch aus Mehrkomponentenfasern, vorzugsweise Bikomponentenfasern bestehen oder diese enthalten, wobei eine der beiden Komponenten - und zwar die außen durch Wärme zugängliche aus Polyolefin besteht. In diesem Fall ist jedoch die Erweichungs- bzw. Schmelztemperatur der äußeren Komponente so gewählt, daß diese zumindest die gleiche ist wie die damit zu verklebenden Fasern bzw. Faseranteile der Stapelfaserschicht. Die Modifikation des Erweichungs- bzw. Schmelzbereichs kann in an sich bekannter Weise durch Einsatz eines Olefin-Copolymeren erzielt werden. Aufgrund des geringeren Reckverhältnisses der vorzugsweise aerodynamisch verstreckten Endlosfilamente im Vergleich zu den mechanisch verstreckten Stapelfasern kann der Comonomer-Anteil im Copolypropylen des Spinnvliesstoffes niedriger sein als in der Stapelfaser.

Der Endlosfilament-Vliesstoff kann vor der Herstellung des neuen Verbundstoffes zusätzlich gereckt worden sein, wobei üblicherweise eine Längung in einer Vorzugsrichtung und eine entsprechende Längenverminderung (Neck-in = Einsprung) im 90° Winkel zur Vorzugsrichtung erfolgt. Der Fasertiter wird in diesem Fall nicht oder nur unwesentlich verändert.

Die Reckung erfolgt vorzugsweise quer zur Maschinenlaufrichtung, um in vorbestimmter Weise einen Festigkeitszuwachs in Querrichtung zu erzielen. Eine solche Maßnahme kann insbesondere dann vorteilhaft sein, wenn das Längs- / Quer-verhältnis der Höchstzukräfte größer als 1/1, wie z.B. 2/1 oder gar 2,5/1 beträgt.

Das Flächengewicht der Endlosfilamentfaserschicht beträgt üblicherweise 15 bis 60 g/m², vorzugsweise 25-45 g/m².

Die zweite, als eigentliche Verhakungsschicht wirkende Schicht umfasst gekräuselte, üblicherweise zweidimensional- oder spiral (helikal) gekräuselte Stapelfasern. Der Titer dieser Stapelfasern ist größer als der Titer der Endlosfilamente in der ersten Vliesstoffschicht. In der Regel bewegt sich der Titer im Bereich von 5,0 bis 12,0 dtex.

Das Flächengewicht der zweiten Vliesstoffschicht beläuft sich in der Regel auf 15 bis 70 g/m², vorzugsweise auf 20 bis 50 g/m².

Das Verbundstoff-Gesamtflächengewicht beläuft sich in der Regel auf 30 bis 130 g/m², vorzugsweise auf 45 bis 95 g/m².

Die gekräuselten Stapelfasern bestehen aus Olefin-Homopolymer oder Olefin-Copolymer oder aus zwei oder mehreren Faserkomponenten aus Olefin-Homopolymer oder Olefin-Copolymer. Eine Kern-/Mantel-Bikomponentenfaser kann beispielsweise auch aus einem Polypropylen-Kern und einem niedriger schmelzenden Copolypropylen-Mantel bestehen. Eine solche Bikomponentenstruktur, die auch eine Side-by-Side-Konfiguration aufweisen kann, ist besonders bevorzugt, da sie kostenmäßig günstiger ist als eine Einkomponentenfaser aus 100% Copolypropylen.

Die Stapelfasern aus Olefin-Homopolymer oder Olefin-Copolymer bzw. die Mehrkomponentenfasern mit Polymer oder Copolymer-Anteil können 100 %iger Bestandteil der Stapelfaserschicht oder nur ein Teil der Stapelfaserschicht sein. Zur Erreichung hoher Verbundfestigkeiten und damit auch hoher Scherkräfte nach Verschluß mit dem Hook-Material und hoher Schälkräfte beim Lösen des Verschlusses sollte der Anteil an Stapelfasern aus Olefin-Homopolymer oder Olefin-Copolymer mindestens 40 Gew.% betragen.

Zum Zwecke des Abtransportes von Schweiß ist diese Stapelfaserschicht vorzugsweise hydrohil gestaltet, entweder dadurch, daß die Fasern oder ein Anteil derselben mit hydrophilen Faserpräparationen belegt sind und/oder daß in die Faser hydrophilierende Additive eingeschmolzen sind, die durch Migration an die Faseroberfläche denselben Hydrophilie verleihen. Der Flüssigkeitstransport kann auch durch Verschnitt mit hydrophilen Fasern, wie mit Zellwolle, Baumwollel, Lyocell oder Wolle bewerkstelligt werden, allerdings in einer Menge, wie dem Fachmann bekannt, daß die Verbundfestigkeiten nicht zu stark verschlechtert werden. Der maximale Anteil an solchen saugfähigen, nicht thermoplastischen Fasern, sollte 40 Gew.%, vorzugsweise 25 Gew.% nicht überschreiten.

Die Stapelfaserschicht ist vorzugsweise nur autogen mit der Endlosfilamentfaser-schicht verschweißt. Im Falle von Mehrkomponentenfasern können diese zusätzlich durch Aufschmelzen der niedriger schmelzenden Komponenten miteinander verschweißt sein. Die dadurch erhöhe Abbindung innerhalb dieser Loop-Schicht führt einerseits zu höheren Scher- und Abschälwerten, aber andererseits zu einer Verschlechterung der textilen Eigenschaften und Erhöhung der Abrasivität auf der Loop-Seite.

In einer besonderen Ausgestaltung der Erfindung kann die der zweiten Vliesstoffschicht gegenüberliegende Seite der ersten Vliesstofflage zusätzlich durch einen Stapelfaserflor aus vorzugsweise hydrophoben oder hydrophob avivierten gekräuselten Feinfasern aus Polyolefinen, wie Polypropylen ("PP"), Propylen-copolymer ("CoPP") oder Bikomponentenfasern mit einer oder beider dieser Komponenten bestehen. Ein solcher dreilagiger Verbundvliesstoff wird beispielsweise dann angestrebt werden, wenn die Anforderungen an die Weichheit und Hautfreundlichkeit ganz besonders hoch angesiedelt sind.

Eine zusätzliche Erhöhung des Tragekomforts auf der hautzugewandten Seite kann auch mit einem speziellen Endlosfilamentvliesstoff erreicht werden, der explizit aus Bikomponentenfasern mit mindestens einer PP- bzw. CoPP-Komponente aufgebaut ist, eine asymmetrische Faserquerschnittskonfiguration bezüglich seiner beiden Komponenten aufweist und durch Recken der Filamente mit den gerichteten Luftströmen beim Spinnvliesprozeß eine Spiralkräuselung erfährt.

Die Erfindung betrifft auch ein Verfahren zur Herstellung des oben beschriebenen Verbundstoffes umfassend die Schritte:
a) Herstellen in an sich bekannter Weise einer ersten Lage eines Polyolefin-Endlos-filamentvliesstoffes, dessen Höchstzugkraft in Maschinenlaufrichtung mindestens so groß ist wie quer dazu,
b) Herstellen in an sich bekannter Weise einer zweiten Lage eines Vliesstoffes, die einen Flor aus gekräuselten Stapelfasern aus Polyolefinen enthält und die gröber als die Fasern des Vliesstoffes der ersten Lage sind, und
c) Verkleben der ersten und der zweiten Lage der Vliestoffe an der gemeinsamen Grenzfläche in Form eines vorgegebenen Musters.

In einer bevorzugten Variante des erfindungsgemäßen Verfahrens zur Herstellung des Verbundstoffes werden die beiden Faserschichten durch Kalandrierung, d.h. durch Hitze und Druck und/oder durch Ultraschall miteinander autogen verschweißt. Dabei besteht das Kalanderwalzenpaar im Falle einer Hitze-/Druck-Kalandrierung aus einer beheizten glatten und linienförmig gravierten Walze, wobei die feintitrige aus Endlosfilament bestehende Seite im Walzenpreßspalt der glatten Walze zugewandt ist. Die Kompositherstellung kann in-line oder aber in zwei getrennten Schritten erfolgen, wobei im letzteren Fall eine der beiden Vliesstoffschichten vorzugsweise durch schwache Vorbindung ein eine handhabbarere Form (zumindest auf- und abwickelbar) übergeführt wird. Zweckmäßigerweise wird der Endlosfilamentvliesstoffe dieser sehr schwachen Vorbindung, wie z.B. Prägung oder Pressung, unterzogen.

Bei dieser bevorzugten Ausführungsform ist die Endlosfilamentfaserschicht im Kalanderpreßspalt der Glattwalze zugewandt und dient in der Anwendung als Gürtel der Erwachsenenwindel weiche, glatte, aber nicht folienartige, textile Seite zur Haut des die Windel tragenden Patienten.

Diese Ausführungsform des erfindungsgemäßen Verfahrens beruht auf der Prägekalandrierung eines zumindest zweilagig aufgebauten Verbundstoffes mit der bereits genannten Zusammensetzung. Mindestens einer der beiden oder der drei oder der noch mehr Vliesstofflagen besteht aus einem Endlosfilamentvliesstoff.

Die Kalandrierung zu dem Verbundstoff bewirkt ein autogenes Verschweißen der unter den Verfestigungsbedingungen schmelzaktivierten Fasern oder Faserbestandteilen. Die Prägekalandrierung kann durch Hitze und Druck oder Mithilfe der Ultraschalltechnik erfolgen.

Unter autogenem Verschweißen ist ein Verschweißen der betroffenen Fasern der zwei bzw. drei Lagen mit sich selbst, d.h. ohne Zusatz eines weiteren Klebemittels, zu verstehen.

Im Falle einer Kalandrierung mit Hitze und Druck liegen die Verschweißtemperaturen im Bereich von 110°C bis 155°C, je nachdem, welche olefinische Faser bzw. Faserkomponente zum Einsatz kommt. Die Kalanderbedingungen sind ganz besonders auf das Schmelz- und Erweichungsverhalten des Spinnvliesstoffes abzustimmen. Es kann insbesondere bei Einsatz eines homofilen Endlosfilamentvliesstoffes angebracht sein, Kalanderbedingungen und insbesondere eine Verschweißtemperatur zu wählen, die nur ein Erweichen und Verformen der Endlosfasern bewirkt ohne dieselben durchzuschmelzen. Dadurch wird sichergestellt, dass kein ungewollter, unverhältnismäßig hoher Festigkeitsabfall an dem als Verstärkungsschicht gedachten Spinnvliesstoff eintritt.

Der Spinnvliesstoff ist vor seiner Überführung in einen Verbundstoff mit Stapelfaserflor in der Regel nur sehr schwach vorverfestigt worden. Darunter ist eine Prägeverfestigung zu verstehen, die nur zu einer Einprägung der Gravur aber zu keiner Verschweißung oder gar Verschmelzung der Endlosfilamenifasern führt. Der Einsatz eines thermisch oder durch Ultraschall musterartig verschweißten Spinnvliesstoffes hat sich als weniger vorteilhaft erwiesen, da die Gefahr einer Versprödung, Verhärtung oder Schädigung des PP-Spinnvliesstoffes besteht und die textilen Eigenschaften stark in Mitleidenschaft gezogen werden können.

Im Falle der Kalander-Laminierung zu dem Verbundstoff durch Hitze und Druck werden in der Regel mindestens eine gravierte und eine glatte Walze eingesetzt, so dass ununterbrochene, sich nicht kreuzende Verschweißlinien über die gesamte Warenfläche erzeugt werden.

Im Falle eines zweilagigen Schichtvliesstoffes wird der Spinnvliesstoff gegen die glatte Kalanderwalze gefahren und erfährt dort eine weiche, aber nicht folienartige Abglättung. Die Stapelfaserschicht aus gekräuselten Grobfasern wird dementsprechend gegen die Gravurwalze gefahren. Es werden dadurch Wellungen erzeugt, deren Höhe in erster Linie von der Gravurtiefe und auch von dem Wiedererholvermögen der Faser abhängt.

Für das erfindungsgemäße Verfahren sind Gravurtiefen von 0,7 bis 2,5 mm zweckmäßig, vorzugsweise jedoch von 0,9 bis 1,6 mm.

Der Kalander-Laminierung kann gegebenenfalls eine Reckung in Maschinenlaufrichtung oder quer zu ihr angeschlossen werden. Unter Reckung wird im Rahmen der vorliegenden Beschreibung eine Umorientierung der Fasern im Verbundstoff verstanden, die nicht mit einem Flächenzuwachs nach Anwendung der Reckung und damit auch nicht mit einer Verkleinerung des Faserdurchmessers der am Verbund beteiligten Fasern verbunden ist. Die Reckung längs oder quer wird bestimmt durch die Hauptausrichtung der linienförmigen Verschweißungen und der Orientierung der die Loop-Schicht bildenden Stapelfasern. Sind die letzteren beispielsweise in Längsrichtung ausgerichtet, sollten die Verschweißungen vorteilhafterweise quer oder zumindest mit einem Winkel kleiner 45° zur Querrichtung ausgerichtet sein. In diesem Fall sollte eine Reckung quer zur Maschinenlaufrichtung vorgenommen werden. Es hat sich dabei herausgestellt, daß sich dadurch die Höhe der Verhakungswellen vergrößert und das Eingreifen der Haken verbessert wird. Die Reckung wird bei Temperaturen unterhalb des Erweichungsbereiches der autogenen Verschweißungen vorgenommen.

Das Verkleben der ersten und der zweiten Lage der Vliestoffe an der gemeinsamen Grenzfläche kann in Form von unterschiedlichen vorgegebenen Mustern erfolgen.

Geometrische Formen der aus der Basis der Gravurwalze abstehenden Linien wurden oben bereits beschrieben.

Die Erfindung schließt jede Art von Mustern ein, beispielsweise von linienförmigen Erhebungen, die auf einem Walzengrundkörper aufgebracht sind und die sich ununterbrochen über die gesamte Walzenbreite oder Walzenlänge erstrecken ohne sich an irgendeiner Walzenoberfläche entweder zu berühren oder zu kreuzen.

In Abbildung 1 sind einige Beispiele für linienförmige Gravuren quer zur Maschinenlaufrichtung dargestellt.

Die jeweils parallel angeordneten, benachbarten Linien mit dem kleineren Abstand stellen die Verschweißflächen bzw. die Erhebungen der gravierten Kalanderwalzenoberfläche dar.

Die erfindungsgemäßen Vliesstoff-Verbundstoffe lassen sich generell als Verhakungskomponenten von Klettverschlüssen für Einwegprodukte einsetzen. Anwendungsbeispiel für solche Einwegprodukte sind Baby-, Kleinkinder- und Erwachsenen-Windeln. Der neue Vliesstoff-Verbund eignet sich insbesondere als textiles, atmungsaktives, hautfreundliches und in Gürtellängsrichtung hochreißfestes Gürtelmaterial mit gleichzeitigen Verhakungseigenschaften für Klettverschlüsse für erwachsene Patienten mit schwerer Inkontinenz. Solche Patienten sind gewöhnlich nicht in der Lage, sich die Windel selbst an- und wieder abzulegen, sondern bedürfen einer fremden Hilfe durch das Pflegepersonal. Der Gürtel muss für diese Anwendung so hochreißfest ausgestattet sein, dass ein zerstörungsfreies Herausziehen der Windel unter dem Körper des Patienten möglich ist. Diese Verwendungen sind ebenfalls Gegenstand der Erfindung.

Der zweite Teil des mechanischen Verschlusssystems ist der sogenannte Hakenteil. Dieser ist gewöhnlich ein durch Kunststoffextrusion hergestelltes Teil, das aus einer Basisplatte und senkrecht dazu ausgerichteten Stämmen aufgebaut ist, deren Enden aus Haken, Mehrfachhaken oder verbreiterten runden bzw. vieleckigen Pilzköpfen besteht. Die Form der Haken bzw. Pilzköpfe erlaubt einerseits ein leichtes Zurseiteschieben der Fasern bzw. Schlingen des Verhakungsteils und ein Verhaken mit denselben.

Die nachfolgenden Beispiele beschrieben die Erfindung ohne diese zu begrenzen.

### Beispiel 1:

Es wurden zwei Stapelfaserflore (a) und (b) auf ein Transportband abgelegt. Stapelfaserflor (a) bestand aus 100 % gekräuselter, auf 60 mm geschnittener Bikomponentenfaser des Titers 6,7 dtex mit Kern/Mantei-Konfiguration aus den Komponenten Polypropylen als Kern und Polyethylen als Mantel, wies ein Flächengewicht von 30 g/m² auf und wurde wirr in Maschinenlaufrichtung abgelegt. Stapelfaserflor (b) bestand aus 100% Polypropylen-Faser mit einem Titer von 1,7 dtex, einer Schnittlänge von 40 mm und einem Florgewicht von 8 g/m². Er wurde im Gegensatz zu Flor (a) in Maschinenlaufrichtung abgelegt. Zwischen die beiden Flore wurde ein 20 g/m² schwerer Spinnvliesstoff aus Polypropylen mit einer Orientierung, die einem Längs-/Quer-Verhältnis der Höchstzugkraft von 1,3 : 1 entsprach und einem Fasertiter von 2,2 dtex quer zur Maschinenlaufrichtung zugeführt und über ein 45° Winkel-Umlenkschwert in Maschinenlaufrichtung umgelenkt und zwischen den beiden Faserfloren (a) und (b) positioniert. Der Spinnvliesstoff war vor der Zuführung zwischen die zwei Stapelfaserlagen durch Prägung bei minimalem Druck und einer Temperatur von nur 135 °C nur sehr schwach prägeverfestigt worden, und dadurch in einen gerade noch auf- und abwickelbaren Zustand überführt worden.

Das Komposit aus diesen drei losen Lagen Stapelfaserflor (a), Polyproyplen-Spinnvliesstoff und Stapelfaserflor (b) wurde nach einer vorherigen Verdichtung im Spalt zwischen zwei glatten, nicht beheizten Stahlwalzen komprimiert. Dies erleichterte die Zuführung zu einem Kalander, dessen Hauptelemente aus einer jeweils beheizten glatten und einer gravierten Stahlwalze bestanden.

Das Oberflächendesign der gravierten Stahlwalze bestand aus parallel zueinander und beinahe quer zur Maschinenlaufrichtung orientierten Linien, die sich 0,8 mm von dem Walzengrund abhoben und einen Abstand zueinander von 4 mm aufwiesen. Der Abstand der Linien zwischen einer Linienkante zur nächsten folgenden Linie betrug 3 mm und die Breite der Linien oder Stege dementsprechend 1 mm. Dies ergab eine Verschweißfläche von 25 % bezogen auf die Gesamtflächenausdehnung der Ware. Um ausreichende Laufruhe (kein sog. Rattern) bei der thermischen Kalandrierung zu gewährleisten waren die Linien nicht exakt in einem von 90 °Winkel zur Maschinenlaufrichtung orientiert sondern in einem um 0,8° davon abweichenden Winkel. Außerdem war die garvierte Kalanderwalze mit sogenannten Stützrändern versehen zur zusätzlichen Erhöhung der Laufruhe.

Die drei Lagen wurden mit einer Geschwindigkeit von 3 m/min. durch den Kalanderpress-Spalt durchgeführt und dabei miteinander verschweißt. Die Temperatur der beiden Kalanderwalzen betrug jeweils 142°C und die Kalanderlinienkraft 50 N/mm. Die Faserflorlage (a) mit den grobtritrigen 6,7 dtex-Fasern war der Gravurwalze zugewandt. Nach Verlassen des Walzenpreßspaltes wurde die Ware aufgerollt. Eine merklicher Schrumpf konnte an der Ware nicht festgestellt werden, so daß ein Fertigmaterialgewicht von 58 g/m² resultierte. Die Gravurkontaktseite wies leicht aus der Ebene in die dritte Dimension aufgerichtete Wellen auf, die sich als Verhakungsmedium für den Hakenteil des mechanischen Verschlußsystemes gut eigneten. Die Feinflorseite (b) war aufgrund ihres Kontaktes mit der Glattwalze flach abgeglättet und vermittelte nicht zuletzt auch aufgrund ihrer feintitrigen Fasern ein weiches, angenehmes Tragegefühl auf der Haut.

### Beispiel 2:

In Beispiel 2 wurde wie in Beispiel 1 verfahren, jedoch mit dem einzigen Unterschied, daß auf den 8 g/m² schweren Stapelfaserflor aus 1,7 dtex Polypropylenfaser verzichtet wurde.

Wie in der Tabelle 1 erkennbar haben sich die Eigenschaften gegenüber Beispiel 1 nur unwesentlich verändert.

### Beispiel 3:

Im Beispiel 3 wurde wie im Beispiel 2 verfahren, jedoch mit dem Unterschied, daß der 20 g/m² schwere, schwach vorgeprägte Polypropylen-Vliesstoff durch eine 30 g/m² schwere Variante ersetzt wurde.

Wie aus den Prüfdaten der Tabelle hervorgeht, konnte dadurch die Festigkeit quer zur Maschinenlaufrichtung um ca. 50% gesteigert werden.

Die Prüfergebnisse der Beispiele 1 bis 3 sind in Tabelle 1 aufgelistet. Es wurden die Fertigmaterialgewichte FMG in g/m², die Dicke in mm, die Höchstzugkraft (HZK) in Längs- und Querrichtung in N/5cm, der Modul bei 10% Dehnung in Längs- und Querrichtung in N/5cm, die Schälkraft in Querrichtung in N/2,5 cm und die Scherkraft in Querrichtung in N/500 mm² des Vliesstoff-Verbundes gemessen. Das Flächengewicht FMG wurde nach EN 29073-01, die Dicke nach EN ISO 9073-02 ,mit einer Belastung von 500 Pa, und Höchstzugkraft HZK sowie der Modul nach EN 29073-03 bestimmt. Die Bestimmung der Scherkraft (engl. shear strength) erfolgte nach ASTM D 5169-91 und die der Schälkraft (engl. peel strength) nach ASTM D 5170-91.

**Tabelle 1:**

| Beispiel | FMG g/m² | Dicke mm | HZK N/5cm | | Dehnung bei HZK % | | Modul 10% N/5cm | | Schälkraft N/25mm | Scherkraft N/500mm² |
|---|---|---|---|---|---|---|---|---|---|---|
| | | | längs | quer | längs | quer | längs | quer | quer | quer |
| 1 | 59,4 | 0,51 | 115,1 | 52,9 | 39,8 | 51,6 | 61,0 | 27,2 | 4,92 | 6 |
| 2 | 50,9 | 0,48 | 111,2 | 52,0 | 39,4 | 50,8 | 59,9 | 26,6 | 4,78 | 6 |
| 3 | 75,2 | 0,66 | 210,4 | | 62,3 | 77,9 | 120,2 | 57,9 | 4,80 | 6 |

## Patentansprüche

1. Mehrlagiger Vliesstoff-Verbundstoff, der mindestens eine Lage eines Polyolefin-Endlosfilamentvliesstoffes aufweist, deren Höchstzugkraft in Maschinenlaufrichtung mindestens so groß ist wie quer dazu, und im wesentlichen aus Fasern einem Titer von weniger als 4,5 dtex besteht, sowie eine mit der ersten Lage verbundene zweite Lage eines Vliesstoffes, die einen Flor aus gekräuselten Stapelfasern aus Polyolefinen enthält und deren gekräuseltes Fasern gröber als die Fasern des Vliesstoffes der ersten Lage sind, wobei die mindestens zwei Vliestofflagen an der gemeinsamen Grenzfläche durch Verkleben in Form eines vorgegebenen Musters miteinander verbunden sind.

2. Mehrlagiger Vliesstoff-Verbundstoff nach Anspruch 1, **dadurch gekennzeichnet, dass** der Polyolefin-Endlosfilamentvliesstoff ein Polypropylen-Endlosfilamentvliesstoff ist.

3. Mehrlagiger Vliesstoff-Verbundstoff nach Anspruch 1, **dadurch gekennzeichnet, dass** das Verhältnis der Höchstzugkraft des Polyolefin-Endlosfilamentvliesstoffes in Maschinenlaufrichtung zur Höchstzugkraft quer dazu 1:1 bis 2,5:1 beträgt.

4. Mehrlagiger Vliesstoff-Verbundstoff nach Anspruch 1, **dadurch gekennzeichnet, dass** der Titer der Fasern des Polyolefin-Endlosfilamentvliesstoffes 0,8 bis 4,4 dtex, bevorzugt 1,5 bis 2,8 dtex, beträgt

5. Mehrlagiger Vliesstoff-Verbundstoff nach Anspruch 1, **dadurch gekennzeichnet, dass** die gekräuselten Stapelfasern der zweiten Lage des Vliesstoffes zweidimensional- und/oder spiral gekräuselt sind.

6. Mehrlagiger Vliesstoff-Verbundstoff nach Anspruch 1, **dadurch gekennzeichnet, dass** die gekräuselten Stapelfasern der zweiten Lage des Vliesstoffes einen Titer von 3,3 bis 20 dtex, bevorzugt 5,0 bis 12,0 dtex, aufweisen.

7. Mehrlagiger Vliesstoff-Verbundstoff nach Anspruch 1, **dadurch gekennzeichnet, dass** die gekräuselten Stapelfasern des Flors der zweiten Vliesstofflage aus Olefin-Homopolymer und/oder Olefin-Copolymer bestehen und/oder Mehrkomponentenfasern mit Anteilen an olefinischem Homo- oder Copolymer sind und mindestens 40 Gew.%, vorzugsweise 100 Gew.%, der die zweite Vliesstofflage bildenden Fasern ausmachen.

8. Mehrlagiger Vliesstoff-Verbundstoff nach Anspruch 1, **dadurch gekennzeichnet, dass** die erste Lage mit der zweiten Lage des Vliesstoffes durch autogenes Verschweißen der polyolefinischen Faserbestandteile beider Schichten an der gemeinsamen Grenzfläche in Form eines vorgegebenen Musters erfolgt ist.

9. Mehrlagiger Vliesstoff-Verbundstoff nach Anspruch 8, **dadurch gekennzeichnet, dass** das autogene Verschweißen durch Kalandrierung erfolgt ist.

10. Mehrlagiger Vliesstoff-Verbundstoff nach Anspruch 1, **dadurch gekennzeichnet, dass** das vorgegebene Muster der Verklebung die Form von sich nicht überkreuzenden und vorzugsweise ununterbrochenen Linien hat.

11. Mehrlagiger Vliesstoff-Verbundstoff nach Anspruch 10, **dadurch gekennzeichnet, dass** die gesamte Verbindungsfläche18-32 % der Gesamtfläche beträgt.

12. Mehrlagiger Vliesstoff-Verbundstoff nach Anspruch 1, **dadurch gekennzeichnet, dass** das Flächengewicht der Endlosfilamentfaserschicht 25-45 g/m² beträgt, und dass das Flächengewicht der zweiten Vliesstoffschicht 20 bis 50 g/m² beträgt.

13. Mehrlagiger Vliesstoff-Verbundstoff nach Anspruch 1, **dadurch gekennzeichnet, dass** das Flächengewicht des Vliesstoff-Verbundstoffes ein Gesamtflächengewicht von 30 bis 130 g/m², vorzugsweise von 45 bis 95 g/m² aufweist.

14. Mehrlagiger Vliesstoff-Verbundstoff nach Anspruch 1, **dadurch gekennzeichnet, dass** dieser auf der der zweiten Vliesstoffschicht gegenüberliegenden Seite der ersten Vliesstofflage zusätzlich einen Stapelfaserflor aufweist, welches vorzugsweise aus hydrophoben oder hydrophob avivierten gekräuselten Feinfasern aus Polyolefinen und/oder Bikomponentenfasern mit einer Polyolefinkomponente bestehen.

15. Verfahren zur Herstellung eines mehrlagigen Vliesstoff-Verbundstoffes nach Anspruch 1 umfassend die Schritte:
a) Herstellen in an sich bekannter Weise einer ersten Lage eines Polyolefin-Endlosfilamentvliesstoffes, dessen Höchstzugkraft in Maschinenlaufrichtung mindestens so groß ist wie quer dazu,
b) Herstellen in an sich bekannter Weise einer zweiten Lage eines Vliesstoffes, die einen Flor aus gekräuselten Stapelfasern aus Polyolefinen enthält und die gröber als die Fasern des Vliesstoffes der ersten Lage sind, und
c) Verkleben der ersten und der zweiten Lage der Vliestoffe an der gemeinsamen Grenzfläche in Form eines vorgegebenen Musters.

16. Verfahren nach Anspruch 15, **dadurch gekennzeichnet, dass** die erste Lage des Polyolefin-Endlosfilamentvliesstoffes und die zweite Lage des Vliesstoffes durch Kalandrieren miteinander autogen verschweißt werden, wobei mindestens ein Kalanderwalzenpaar zum Einsatz kommt, das aus einer beheizten glatten und einer linienförmig gravierten Walze besteht, und wobei die erste Lage des Polyolefin-Endlosfilamentvliesstoffes im Walzenpreßspalt der glatten Walze zugewandt ist und die zweite Lage des Vliesstoffes der linienförmig gravierten Walze zugewandt ist.

17. Verfahren nach Anspruch 16, **dadurch gekennzeichnet, dass** die Kalanderwalzen auf Temperaturen im Bereich von 110°C bis 155°C beheizt sind.

18. Verfahren nach Anspruch 16, **dadurch gekennzeichnet, dass** die linienförmig gravierten Walze Gravurtiefen von 0,7 bis 2,5 mm, vorzugsweise von 0,9 bis 1,6 mm, aufweist.

19. Verwendung der Vliesstoff-Verbundstoffe nach Anspruch 1 als Windel, insbesondere als Windel für erwachsene Inkontinenz-Patienten.
